(19) Europäisches Patentamt
European Patent Office
Office européen des brevets

(11) Veröffentlichungsnummer: **0 037 379**
**A1**

# (12) EUROPÄISCHE PATENTANMELDUNG

(21) Anmeldenummer: 81810115.6

(22) Anmeldetag: 23.03.81

(51) Int. Cl.³: C 08 G 59/46
C 08 G 59/50, C 08 G 59/56
D 21 H 3/08, D 21 H 3/38

(30) Priorität: 28.03.80 CH 2491/80

(43) Veröffentlichungstag der Anmeldung:
07.10.81 Patentblatt 81/40

(84) Benannte Vertragsstaaten:
BE CH DE FR GB IT LI NL SE

(71) Anmelder: CIBA-GEIGY AG
Patentabteilung Postfach
CH-4002 Basel(CH)

(72) Erfinder: Töpfl, Rosemarie
Dornechstrasse 68
CH-4143 Dornach(CH)

## (54) Umsetzungsproduktsalze aus Epoxyden, Polyalkylenpolyaminoamiden, Fettaminen und Fettsäuren, Fettsäureestern, -halogeniden, -iso-cyanaten oder -ketendimeren, deren Herstellung und Verwendung als Papierleimungsmittel.

(57) Neue, als Papierleimungsmittel verwendbare Umsetzungsproduktsalze aus
(A) 1,0 Epoxygruppenäquivalent eines Diglycidyläthers,
(B) 0,2 bis 1,0 Aminogruppenäquivalent eines Polyalkylenpolyaminoamides aus
(B') einer polymerisierten, ungesättigten Fettsäure und
(B") einem aliphatischen Polyalkylenpolyamin,
(C) 0,3 bis 0,6 Aminogruppenäquivalent eines primären Fettamins,
(D) 0 bis 1,0 Mol pro Epoxygruppenäquivalent der Komponente (A) eines Epihalogenhydrins und
(E) 0,01 bis 0,5 Mol pro Aminogruppenäquivalent der Komponenten (B) und (C) einer Fettsäure oder deren Niederalkylester, Isocyanat, Halogenide oder Keten-Dimer.

EP 0 037 379 A1

Croydon Printing Company Ltd

CIBA-GEIGY AG
Basel (Schweiz)

1-12786/+

Umsetzungsproduktsalze aus Epoxyden, Polyalkylenpolyaminoamiden, Fettaminen und Fettsäuren, Fettsäureestern, -halogeniden, -isocyanaten oder -ketendimeren, deren Herstellung und Verwendung als Papierleimungsmittel.

Gegenstand der Erfindung sind neue Umsetzungsprodukte aus

(A) 1,0 Epoxygruppenäquivalent eines Diglycidyläthers des 2,2-Bis-(4'-hydroxyphenyl)-propans ,

(B) 0,2 bis 1,0 Aminogruppenäquivalent eines Polyalkylenpoly-aminoamides aus

(B') einer polymerisierten, ungesättigten Fettsäure, die sich von Fettsäuren mit 12 bis 24 Kohlenstoffatomen ableitet, und

(B") einem aliphatischen Polyalkylenpolyamin mit 4 bis 12 Kohlenstoffatomen,

(C) 0,3 bis 0,6 Aminogruppenäquivalent mindestens eines primären Fettamins mit 12 bis 24 Kohlenstoffatomen,

(D) 0 bis 1,0 Mol pro Epoxygruppenäquivalent der Komponente (A) eines Epihalogenhydrins

und

(E) 0,01 bis 0,5 Mol pro Aminogruppenäquivalent der Komponenten (B) und (C) mindestens einer gesättigten oder ungesättigten Fettsäure mit 12 bis 24 Kohlenstoffatomen, oder deren Alkylester mit 1 bis 4 Kohlenstoffatomen im Alkylrest,Isocyanat,Halogenide oder Keten-Dimer,

wobei die Umsetzungsreaktionen gegebenenfalls in Gegenwart eines inerten, organischen Lösungsmittels bei Temperaturen bis zu 110°C durchgeführt werden und dafür gesorgt wird, dass durch einen Säurezusatz spätestens nach Beendigung der Umsetzungen eine mit Wasser auf 10 bis 40 Gewichtsprozent verdünnte Probe des Reaktionsgemisches unter Salzbildung einen pH-Wert von 2 bis 8 aufweist.

Weitere Gegenstände der Erfindung sind das Herstellungsverfahren der Umsetzungsproduktsalze aus den angegebenen Komponenten (A), (B), (C), (E) und gegebenenfalls (D), die Verwendung der Umsetzungsprodukte als Papierleimungsmittel, ein Verfahren zur Massen- und insbesondere zur Oberflächenleimung von Papier unter Einsatz der Umsetzungsprodukte und das nach diesem Verfahren geleimte Papier.

Die Komponente (A) aus denen die erfindungsgemässen Umsetzungsprodukte erhalten werden, sind Diglycidyläther des 2,2-Bis(4'-hydroxyphenyl)-propans, auch Bisphenol A genannt, die vorzugsweise einen Epoxydgehalt von 1,8 bis 5,8, insbesondere 5 bis 5,5 Epoxygruppenäquivalenten/kg aufweisen. Besonders bevorzugte Epoxide dieser Art entsprechen der Formel

(1) 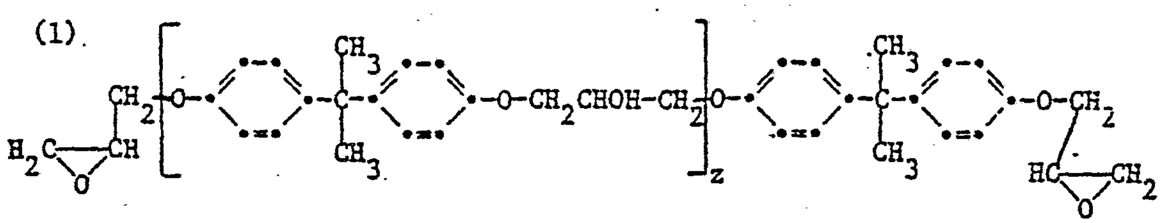

worin z eine Durchschnittszahl im Werte von 0 bis 0,65 bedeutet. Hierbei steht 0 als Wert für z im Vordergrund des Interesses. Solche Epoxyde werden z.B. durch Umsetzung von 2,2-Bis(4'-hydroxyphenyl)-propan mit Epichlorhydrin oder Bis-halogenhydrinverbindungen und nachfolgender Behandlung mit einer Base erhalten.

Die als Komponente (B') zur Bildung des Polyalkylenpolyaminoamides (B) verwendeten polymerisierten ungesättigten Fettsäuren sind vorzugsweise di- bis trimerisierte Fettsäuren, welche sich von Monocarbonsäuren mit 12 bis 24, vorzugsweise 16 bis 22 und insbesondere 16 bis 18 Kohlenstoffatomen ableiten. Diese Monocarbonsäuren sind Fettsäuren mit mindestens einer, vorzugsweise 2 bis 5 äthylenisch ungesättigten Bindungen. Vertreter dieser Klasse von Säuren sind z.B. die Laurolein-, Myristolein-, Palmitolein-, Physetöl-, Oel-, Elaidin-, Petroselin-, Eikosen-, Cetolein-, Gadolein-, Eruka-, vorzugsweise Eläostearin-, Parinar-, Arachidon-, Clupanodon-, Nisin- und insbesondere Linol- und Linolensäure. Diese Fettsäuren können aus natürlichen Oelen pflanzlicher oder tierischer Herkunft, worin sie vor allem als Glyceride vorkommen, gewonnen werden.

Die erfindungsgemäss eingesetzten di- bis trimerisierten Fettsäuren (B') werden in bekannter Weise durch Dimerisation von Monocarbonsäuren der angegebenen Art erhalten. Die sogenannten dimerisierten Fettsäuren stellen technische Gemische dar, welche stets einen Gehalt an trimerisierten und einen kleinen Gehalt an monomeren Säuren aufweisen.

Besonders geeignet als Komponente (B') ist die di- bis trimerisierte Linol- oder Linolensäure. Die technischen Gemische dieser Säuren enthalten in der Regel 75 bis 95 Gewichtsprozent dimerisierter Säure, 4 bis 25 Gewichtsprozent trimerisierter Säure und eine Spur bis 3 Gewichtsprozent monomerer Säure. Das Molverhältnis von dimerisierter zu trimerisierter Säure beträgt demnach etwa 5:1 bis 36:1.

Als Komponente (B") eignen sich vor allem Polyalkylenpolyamine der Formel

(2) $$H_2N-(CH_2-CH_2-NH)_n-CH_2-CH_2-NH_2$$ ,

worin n 1 bis 5, vorzugsweise 1, 2 oder 3 ist, d.h. Diäthylentriamin, Triäthylentetramin oder Tetraäthylenpentamin, wobei dem Triäthylentetramin eine besondere Bedeutung zukommt.

Im Falle von Amingemischen kann man auch einen nicht ganzzahligen Durchschnittswert annehmen, z.B. zwischen 1 und 2. Technische Amingemische der angegebenen Art sind auch bevorzugt.

Als Komponente (B) von besonderem Interesse wird ein Polyalkylenpolyaminoamid aus di- bis trimerisierter Linol- oder Linolensäure und Triäthylentetramin eingesetzt.

Als gut geeignete Komponenten (C) haben sich vor allem gesättigte oder ungesättigte primäre Fettamine mit 12 bis 24, vorzugsweise 16 bis 22, und insbesondere 16 bis 18 Kohlenstoffatomen erwiesen.

Bei den Aminen handelt es sich also z.B. um Lauryl-, Myristyl-, Arachidyl- oder Behenylamin und insbesondere um Palmityl-, Stearyl- oder Oleylamin. Auch Gemische solcher Amine, wie sie als technische Produkte erhältlich sind, kommen vor allem in Betracht.

Polyalkylenpolyaminoamide als Komponente (B) und Monofettamine als Komponente (C), welche jeweils 3 bis 4 Aminogruppenäquivalente pro kg aufweisen, stehen im Vordergrund des Interesses.

Als Halogenhydrin für die fakultative Komponente (D) kommen vor allem Epibrom- und insbesondere Epichlorhydrin in Betracht.

Als Komponente (E) werden gesättigte oder ungestättigte Fettsäuren mit 12 bis 24, vorzugsweise 16 bis 22 und insbesondere 16 bis 18 Kohlenstoffatomen, deren Alkylester mit 1 bis 4 Kohlenstoffatomen im Alkylrest, d.h. Isobutyl-, Butyl-, Isopropyl-, Propyl-, vorzugsweise Aethyl- und insbesondere Methylester, Halogenide, vorzugsweise Bromid oder insbesondere Chlorid, Isocyanat oder Keten-Dimer. Vertreter dieser Fettsäuren mit 12 bis 15 Kohlenstoffatomen sind z.B. Dodecen- und Tetradecensäure und vor allem Laurin- und Myristinsäure. Vertreter der bevorzugten Fettsäuren mit 16 bis 22 Kohlenstoffatomen sind bereits für die Komponente (B') genannt worden. Fettsäuren mit 16 bis 18 Kohlenstoffatomen wie Palmitin-, Stearin- und Oelsäure, vor allem deren Methylester, Chlorid, Isocyanat oder insbesondere deren Keten-Dimer stehen im Vordergrund des Interesses. Die Keten-Dimere solcher Fettsäuren sind an sich bekannt und deren Herstellung

ist z.B. in der US Patentschrift 2 383 863 oder in Chem. Abst. 56, 12747 i (1962) beschrieben. Keten-Dimere dieser Art haben eine cyclische Struktur, die z.B. der Formel

(3) 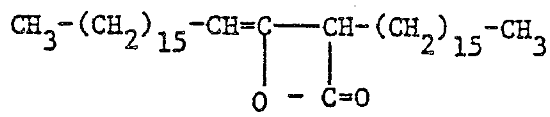

entspricht, sofern Stearinsäure bzw. Stearinsäurechlorid, zu deren Herstellung eingesetzt worden ist.

Das organische Lösungsmittel, in Gegenwart welches die Umsetzungsreaktionen der Komponenten (A), (B), (C), (E) und gegebenenfalls (D) durchgeführt werden können, ist inert, d.h. vermag mit keiner der erwähnten Komponenten zu reagieren, sofern als Komponente (E) weder ein Fettsäurechlorid noch ein Fettsäureisocyanat eingesetzt wird.

In der vorliegenden Erfindung werden als sogenannte Fettsäureisocyanate Isocyanate mit langkettigen Alkyl- oder Alkenylresten verstanden, die z.B. durch Umsetzung der entsprechenden Fettamine mit Phosgen erhältlich sind. Als Vertreter solcher Isocyanate seien Octadecen-, Docosan-, Dodecyl- und insbesondere Octadecylisocyanat genannt.

Als organische Lösungsmittel kommen in erster Linie wasserlösliche organische Lösungsmittel in Betracht, und zwar zweckmässig solche, die mit Wasser beliebig mischbar sind. Als Beispiele seien cycloaliphatische oder aliphatische Aether mit 3 oder vorzugsweise 2 Sauerstoffatomen und 2 bis 8, vorzugsweise 4 bis 8 Kohlenstoffatomen wie Dioxan, Aethylenglykolmono-n-butyläther (= n-Butylglykol), Diäthylenglykolmono-n-butyläther und insbesondere Alkanole mit 1 bis 4 Kohlenstoffatomen, z.B. Isopropanol, Aethanol und Methanol, erwähnt.

Daneben ist es aber auch möglich, die Umsetzungen in Gegenwart von wasserunlöslichen organischen Lösungsmitteln durchzuführen, z.B. in Benzinkohlenwasserstoffen wie Benzin, Petroläther, Benzol oder halogenierten oder mit niederen Alkylgruppen substituierten Benzolen

wie Toluol, Xylol, Chlorbenzol; alicyclischen Verbindungen wie Tetralin oder Cyclohexan; halogenierten Kohlenwasserstoffen mit vorzugsweise 1 oder 2 Kohlenstoffatomen wie Methylenchlorid, Methylenbromid, Chloroform, Tetrachlorkohlenstoff, Aethylenchlorid, Aethylenbromid, s-Tetrachloräthan und vor allem Trichloräthylen oder Perchloräthylen. Diese Lösungsmittel kommen vor allem in Betracht, falls Fettsäurechloride oder -isocyanate als Komponente (E) eingesetzt werden. In diesem Fall kann aber auch die Umsetzung mit der Komponente (E) in Schmelze durchgeführt werden.

In der Regel werden alle Umsetzungen im gleichen Lösungsmittel durchgeführt, wobei Isopropanol im Vordergrund des Interesses steht.

Als bevorzugten Temperaturbereich, bei welchem die Umsetzungen in den erwähnten Lösungsmitteln durchgeführt werden, kommt 20 bis 110°C, vorzugsweise 40 bis 95° und insbesondere 60 bis 95° in Betracht.

Für den zur Einstellung des pH-Wertes auf 2 bis 8 benötigten Säurezusatz kommen sowohl anorganische als auch organische Säuren mit höchstens 4 Kohlenstoffatomen in Frage.

Als organische Säuren kommen vor allem Salz- oder Salpetersäure, vorzugsweise Phosphorsäure, insbesondere Orthophosphorsäure sowie ferner auch Sulfaminsäure in Betracht. Als organische Säuren kommen gesättigte Di- oder vorzugsweise Monocarbonsäuren mit höchstens 4 Kohlenstoffatomen wie Oxal-, Malon-, Bernstein-, vorzugsweise Ameisen-, Essig- und Propionsäure in Betracht. Gemische der genannten Säuren können ebenfalls verwendet werden. Den flüchtigen, gesättigten Monocarbonsäuren wie Ameisensäure und insbesondere Essigsäure, kommt eine besondere Bedeutung zu.

Ebenfalls bevorzugt sind Orthophosphor-, Sulfamin- und Oxalsäure, gegebenenfalls in Gegenwart von Ameisen- oder Essigsäure, d.h. Sulfaminsäure für sich allein einerseits oder Orthophosphorsäure unter nachträglichem Einsatz von Ameisen- oder Essigsäure

andererseits. Im Vordergrund des Interesses steht der Einsatz von Ameisen- und insbesondere von Essigsäure für sich allein, wobei Umsetzungsproduktsalze erhalten werden, die bei deren Verdünnen mit Wasser einen bevorzugten pH-Wert von 4 bis 6 aufweisen. Hierbei werden in der Regel homogene Emulsionen der Umsetzungsproduktsalze (A) erhalten, die einen Salzgehalt, berechnet auf Trockensubstanz, von 15 bis 35 Gewichtsprozent aufweisen.

Der Säurezusatz erfolgt zweckmässig bereits während der Umsetzung der Komponenten (A), (B), (C), (E) und gegebenenfalls (D) oder erst nach Beendigung der Umsetzungen. Falls für die Komponenten (E) der Alkylester, Isocyanat oder Halogenid einer Fettsäure der angegebenen Art eingesetzt wird, erfolgt der Säurezusatz vorzugsweise nach der Umsetzung mit der Komponente (E). Wird hingegen die Fettsäure selber oder deren Keten-Dimer der angegebenen Art für die Komponente (E) eingesetzt, so erfolgt der Säurezusatz vorzugsweise vor der Umsetzung mit der Komponente (E).

Falls die Komponente (D) mitverwendet wird, werden vorzugsweise 0,1 bis 0,5 und insbesondere 0,1 bis 0,2 Mol der Komponente (D) pro Epoxygruppenäquivalent der Komponente (A) eingesetzt. Jedoch werden vor allem Umsetzungsprodukte bevorzugt, die nur aus den Komponenten (A), (B), (C) und (E), d.h. in Abwesenheit der Komponenten (D) hergestellt werden. Hierbei werden pro Epoxygruppenäquivalent der Komponente (A) vorzugsweise 0,4 bis 0,8, insbesondere 0,3 bis 0,6 Aminogruppenäquivalente der Komponente (B) eingesetzt. Somit stehen äquivalente Mengen an Komponenten (B) und (C), berechnet als Aminogruppenäquivalente der Komponente (A) und (B) bezogen auf 1,0 Epoxygruppenäquivalent der Komponente (A), im Vordergrund des Interesses.

Sofern als Komponente (E) eine Fettsäure, deren Isocyanate Ester oder Halogenide der angegebenen Art eingesetzt werden, werden pro Aminogruppenäquivalent der Komponenten (B) und (C) vorzugsweise 0,02 bis

0,5 Mol der Komponente (E) eingesetzt. Insbesondere werden ohne Mitverwendung der fakultativen Komponente (D) 1 Epoxygruppenäquivalent der Komponente (A), jeweils 0,3 bis 0,6 Mol der Komponenten (B) und (C) und 0,02 bis 0,2 Mol Fettsäure oder deren Isocyanat, Ester oder Halogenid als Komponente (E) eingesetzt.

Sofern als Komponente (E) ein Keten-Dimer der Fettsäure der angegebenen Art eingesetzt wird, das pro Mol wie ersichtlich aus der Formel (3) zwei Fettsäurereste enthält, werden pro Aminogruppenäquivalent der Komponenten (B) und (C) vorzugsweise 0,01 bis 0,25 Mol der Komponente (E) eingesetzt. Insbesondere werden ohne Mitverwendung der fakultativen Komponente (D) 1 Epoxygruppenäquivalent der Komponente (A), jeweils 0,3 bis 0,6 Mol der Komponenten (B) und (C) und 0,01 bis 0,1 Mol Keten-Dimer der Fettsäure als Komponente (E) eingesetzt.

Die Reihenfolge, mit welcher die Komponenten (A), (B), (C), (E) und gegebenenfalls (D) zur Bildung der erfindungsgemässen Umsetzungsprodukte miteinander umgesetzt werden, ist von untergeordneter Bedeutung. In der Regel wird jedoch die Komponente (C) vorgelegt, die zuerst mit der Komponente (A), dann mit der Komponente (B) und zuletzt mit der Komponente (E) umgesetzt wird. Es können auch zuerst die Komponenten (A) und (C) zu einem Epoxyd-Fettamin-Umsetzungsprodukt vorkondensiert werden, das zuerst mit der Komponente (B) und am Schluss mit der Komponente (E) weiter umgesetzt wird. Wird die fakultative Komponente (D) mitverwendet, so kann sie z.B. nach dem Umsetzen der Komponente (A), (B) und (C) in der angegebenen Reihenfolge eingesetzt werden, wobei die Weiterumsetzung mit der Komponente (E) zuletzt durchgeführt wird. Man kann aber auch die Komponente (B) vorlegen, sie mit der Komponente (E) zuerst zu einem fettmodifizierten Polyalkylenpolyaminoamid umsetzen, das mit dem Epoxyd als Komponente (A) und anschliessend mit dem Fettamin als Komponente (C) oder mit einem vorgebildeten Epoxyd-Fettamin-Umsetzungsprodukt weiter umgesetzt wird, wobei die fakultative, weitere

Umsetzung mit dem Epihalogenhydrin als Komponente (D) am Schluss durchgeführt wird. Als Arbeitsweise, die im Vordergrund des Interesses steht, wird das aus den Komponenten (B) und (E) vorgebildete fettmodifizierte Polyalkylenpolyaminoamid-Umsetzungsprodukt mit einem Epoxyd-Fettamin-Umsetzungsprodukt aus den Komponenten (A) und (C) ohne weitere Umsetzung mit einem Epihalogenhydrin als Komponente (D) zum erfindungsgemässen Umsetzungsprodukt kondensiert.

Die Umsetzungsprodukte liegen stets als Salze vor, da der bereits beschriebene Säurezusatz unter Salzbildung immer durchgeführt wird. Diese Umsetzungsproduktsalze stellen in der Regel homogene, dünnflüssige, feinteilige Emulsionen dar, deren Gehalt, berechnet auf Trockensubstanz, 10 bis 40, vorzugsweise 20 bis 30 Gewichtsprozent beträgt, und die sich durch ihre hervorragende Lagerstabilität auszeichnen. Solche Emulsionen der erfindungsgemässen Umsetzungsproduktsalze finden als Leimungsmittel für Papier für die Massenleimung und vorzugsweise für die Oberflächenleimung Verwendung.

Vor ihrer Verwendung als Papierleimungsmittel werden die 10 bis 40 gewichtsprozentigen Emulsionen der Umsetzungsprodukte mit Wasser so verdünnt, dass wässrige Leimflotten entstehen, deren Gehalt, berechnet auf Trockensubstanz, 0,02 bis 1, vorzugsweise 0,02 bis 0,2 Gewichtsprozent beträgt. Bei der Oberflächenleimung wird das Papier mit der verdünnten Leimflotte im Allgemeinen bei Raumtemperatur z.B. durch Aufsprühen oder insbesondere durch Foulardieren imprägniert, und anschschliessend bei 60 bis 140°, vorzugsweise 90 bis 110°C während 0,1 bis 10, vorzugsweise 1 bis 6 Minuten,getrocknet. Nach dem Trocknen werden Flächenaufträge der Umsetzungsproduktsalze, berechnet auf Trockensubstanz, von 50 bis 150, vorzugsweise 60 bis 120 $mg/m^2$ erhalten.

Mit bereits geringen Mengen an erfindungsgemässen Umsetzungsproduktsalzen, können auf Papier sehr gute Leimungseffekte erzielt werden, die aufgrund von positiven Testergebnissen wie Wasseraufnahme nach Cobb und alkalische Tintenschwimmdauer bestätigt werden. Insbesondere ermöglichen bei der Oberflächenleimung die geringen Flächenaufträge eine rasche Arbeitsweise, so dass bei einer Trocknungstemperatur von z.B. 90 bis 110° C bereits innerhalb etwa 20 bis 40 Sekunden gute Leimungen erzielt werden. Darüber hinaus weisen die erfindungsgemäss verwendeten Umsetzungsproduktsalze eine gute Kompatibilität mit den üblichen, in der Papierindustrie verwendeten Hilfsstoffen wie Stärken, Farbstoffen, Pigmenten, Bindemitteln wie etwa Stärke, insbesondere kationischen optischen Aufhellern und sonstigen Zusatzstoffen auf. Zudem neigen die Umsetzungsproduktsalze nicht zu einer unerwünschten Schaumbildung.

In den nachfolgenden Beispielen sind die angegebenen Teile und Prozente stets Gewichtseinheiten.

Beispiel 1: 31,2 Teile Talgfettamin (0,12 Aminogruppenäquivalent eines technischen Gemisches aus 30 % Palmitylamin, 30 % Stearylamin und 40 % Oleylamin, das 3,84 Aminoäquivalente/kg aufweist) werden in 12 Teilen Isopropanol bei 80° C gelöst. In die Fettaminlösung wird eine Lösung aus 45,4 Teilen eines aus 2,2-Bis(4'-hydroxyphenyl)-propan und Epichlorhydrin gebildeten Epoxyds (0,24 Epoxygruppenäquivalente des Epoxydes, das 5,29 Epoxydvalente/kg aufweist) in 12 Teilen Isopropanol zugegeben, wobei eine exotherme Reaktion einsetzt. Das Reaktionsgemisch wird nach der Epoxydzugabe während 15 Minuten bei 85° C gehalten und anschliessend mit einer Lösung aus 25,8 Teilen eines aus dimerisierter Linolsäure und Triäthylentetramin gebildeten Polyäthylenpolyaminoamides (0,12 Aminogruppenäquivalent des Polyaminoamids, das 4,65 Aminäquivalente/kg aufweist) in 30 Teilen Isopropanol versetzt. Nach der Polyäthylenpolyaminoamidzugabe wird das Reaktionsgemisch wiederum auf 85°C geheizt, während

30 Minuten bei dieser Temperatur gehalten und anschliessend mit 14,5 Teilen Eisessig versetzt. Nach der Eisessigzugabe weist eine mit Wasser im Verhältnis 1:5 verdünnte Probe des Reaktionsgemisches einen pH-Wert von 4.8 auf. Das Reaktionsgemisch wird nun auf 70°C gekühlt und bei dieser Temperatur mit einer Lösung aus 31 Teilen eines technischen Gemisches aus Hexadecyl- und Tetradecylketen-Dimer (0,06 Mol) in 31 Teilen Isopropanol versetzt. Nach der Keten-Dimer-Zugabe wird das Reaktionsgemisch wiederum auf 70°C geheizt, während 1 Stunde bei dieser Temperatur gehalten und anschliessend mit 434 Teilen Wasser verdünnt. Man erhält 666,9 Teile einer dünnflüssigen, feinteiligen Emulsion, deren Gehalt, berechnet auf Trockensubstanz, 20 % beträgt.

Beispiel 2: Man verfährt wie in Beispiel 1 angegeben, löst jedoch die 25,8 Teile des Polyäthylenpolyaminoamides in 10 Teilen Isopropanol, versetzt das Reaktionsmisch nach der Eisessigzugabe bei 85°C mit einer Lösung aus 15,4 Teilen Behensäure (0,045 Mol) in 15 Teilen Isopropanol, heizt das Reaktionsgemisch nach der Behensäurezugabe wiederum auf 85°C, hält es bei dieser Temperatur während 1 Stunde und verdünnt es anschliessend mit 407 Teilen Wasser. Man erhält 588,3 Teile einer dünnflüssigen, feinteiligen Emulsion, deren Gehalt, berechnet auf Trockensubstanz, 20 % beträgt.

Beispiel 3: Man verfährt wie in Beispiel 1 angegeben, löst jedoch die 25,8 Teile des Polyäthylenpolyaminoamides in 10 Teilen Isopropanol, versetzt das Reaktionsgemisch nach der Eisessigzugabe bei 85°C mit einer Lösung aus 30,7 Teilen Stearinsäure, (0,108 Mol) in 30 Teilen Isopropanol, heizt das Reaktionsgemisch nach der Stearinsäurezugabe wiederum auf 85°C, hält es bei dieser Temeratur während 1 Stunde und verdünnt es anschliessend mit 454 Teilen Wasser . Man erhält 665,6 Teile einer dünnflüssigen, feinteiligen Emulsion, deren Gehalt, berechnet auf Trockensubstanz, 20 % beträgt.

Beispiel 4: 33,6 Teile Talgfettamin (0,12 Aminogruppenäquivalent eines technischen Gemisches aus 30% Palmitylamin, 30% Stearylamin und 40% Oleylamin, das 3,57 Aminäquivalente/kg aufweist) werden in 12 Teilen Isopropanol bei 80°C gelöst. In die Fettaminlösung wird eine Lösung aus 47,5 Teilen eines aus 2,2-Bis(4'-hydroxyphenyl)-propan und Epichlorhydrin gebildeten Epoxyds (0,24 Epoxygruppenäquivalent des Epoxydes, das 5,05 Epoxyäquivalent/kg aufweist) in 12 Teilen Isopropanol zugegeben, wobei eine exotherme Reaktion einsetzt. Das Reaktionsgemisch wird nach der Epoxydzugabe während 15 Minuten bei 85°C gehalten und anschliessend mit einer Lösung aus 27 Teilen eines Umsetzungsproduktes aus 2,7 Teilen (0,009 Mol) Stearinsäurechlorid und 24,3 Teilen eines aus dimerisierter Linolsäure und Triäthylentetramin gebildeten Polyäthylenpolyaminoamides (0,09 Aminogruppenäquivalent des Polyaminoamides, das ein Amingehalt von 3,7 Aequivalenten/kg aufweist) in 12 Teilen Isopropanol versetzt. Nach der Umsetzungsproduktzugabe wird das Reaktionsgemisch wiederum auf 85°C geheizt, während 2 Stunden bei dieser Temperatur gehalten, anschliessend mit 13 Teilen Eisessig versetzt und schliesslich mit 202 Teilen Wasser verdünnt. Man erhält 357,6 Teile einer dünnflüssigen, feinteiligen Emulsion, die einen pH-Wert von 4,5 aufweist und deren Gehalt, berechnet auf Trockensubstanz, 30% beträgt.

Beispiel 5: Man verfährt wie in Beispiel 4 angegeben, setzt jedoch eine Lösung aus 44,6 Teilen eines Epoxyds gemäss Beispiel 4 in 12 Teilen Isopropanol ein, das jedoch 5,37 Epoxyäquivalente/kg aufweist (0,24 Epoxygruppenäquivalent) und versetzt das Reaktionsgemisch nach der Umsetzung mit dem Epoxyd mit einer Lösung aus 46 Teilen eines Umsetzungsproduktes aus 10,4 Teilen (0,037 Mol) Octadecylisocyanat und 35,6 Teilen eines aus dimerisierter Linolsäure und Triäthylentetramin gebildeten Polyäthylenpolyaminoamides (0,15 Aminogruppenäquivalent des Polyaminoamides, das 4,2 Aminäquivalente/kg aufweist) in 40 Teilen Isopropanol. Nach der Umsetzungsproduktzugabe wird das Reaktionsgemisch während 2 Stunden bei 85°C gehalten, anschliessend mit 14,5 Teilen Eisessig versetzt und schliesslich mit

213 Teilen Wasser verdünnt. Man erhält 415,7 Teile einer dünnflüssigen, feinteiligen Emulsion, die einen pH-Wert von 4,4 aufweist und deren Gehalt, berechnet auf Trockensubstanz, 30% beträgt.

Beispiel 6: Man verfährt wie in Beispiel 4 angegeben, setzt jedoch eine Lösung aus 44,6 Teilen eines Epoxyds gemäss Beispiel 4 in 12 Teilen Isopropanol ein, das 5,37 Epoxyäquivalente/kg aufweist, (0,24 Epoxygruppenäquivalent) und versetzt das Reaktionsgemisch nach der Umsetzung mit dem Epoxyd mit einer Lösung aus 41,4 Teilen eines Umsetzungsproduktes aus 8,4 Teilen (0,028 Mol) Stearinsäuremethylester und 33 Teilen eines aus dimerisierter Linolsäure und Triäthylentetramin gebildeten Polyäthylenpolyaminoamids (0,14 Aminogruppenäquivalent des Polyaminoamids, das 4,2 Aminäquivalente/kg aufweist) in 37,6 Teilen Isopropanol. Nach der Umsetzungsproduktzugabe wird das Reaktionsgemisch während 2 Stunden bei 85°C gehalten, anschliessend mit 14,4 Teilen Eisessig versetzt und schliesslich mit 203 Teilen Wasser verdünnt. Man erhält 398,6 Teile einer dünnflüssigen, feinteiligen Emulsion, die einen pH-Wert von 4,3 aufweist und deren Gehalt, berechnet auf Trockensubstanz, 30% beträgt.

Beispiel 7: 39,84 Teile eines Gemisches aus 27% 1-Aminodokosan, 27% 1-Aminoeikosan, 36% Stearylamin und 10% Palmitylamin (0,12 Aminogruppenäquivalent des technischen Gemisches, das einen Amingehalt von 3,01 Aequivalente/kg aufweist) werden in 17 Teilen Aethylenglykolmono-n-butyläther bei 85°C gelöst. In die Fettaminlösung wird eine Lösung aus 45,6 Teilen eines aus 2,2-Bis-(4'-hydroxyphenyl)-propan und Epichlorhydrin gebildeten Epoxyds (0,24 Epoxygruppenäquivalent des Epoxydes, das einen Epoxydgehalt von 5,26 Aequivalente/kg aufweist) in 15,2 Teilen Aethylenglykolmono-n-butyläther zugegeben, wobei eine exotherme Reaktion einsetzt. Das Reaktionsgemisch wird während 1 Stunde bei 90°C gehalten und anschliessend mit einer Lösung aus 27,6 Teilen eines Umsetzungsproduktes aus 0,7 Teilen Oelsäurechlorid

(0,0023 Mol) und 29,6 Teilen eines aus dimerisierter Linolsäure und Triäthylentetramin gebildeten Polyäthylenpolyaminoamides (0,11 Aminogruppenäquivalent des Polyaminoamids, das einen Amingehalt von 3,96 Aequivalente/kg aufweist) in 15 Teilen Aethylenglykolmono-n-butyläther versetzt. Nach dieser Zugabe wird das Reaktionsgemisch während 30 Minuten bei 90°C gehalten, dann mit 11,1 Teilen Epichlorhydrin (0,12 Mol) versetzt und nochmals 30 Minuten bei 90°C gehalten. Anschliessend wird das Reaktionsgemisch mit einer Lösung versetzt, die 12 Teile einer 35%igen Salzsäure in 439 Teilen Wasser enthält. Man erhält 622 Teile einer dünnflüssigen, feinteiligen Emulsion, deren Gehalt, berechnet auf Trockensubstanz, 20% beträgt und welche einen pH-Wert von 4,7 aufweist.

Beispiel 8: Ein Filterpapier aus reiner Cellulose mit einem Flächengewicht von 110 $g/m^2$ wird mit einer Geschwindigkeit von 4 m/min und einem Anpressdruck von 10 $kg/cm^2$ mit einer wässrigen Flotte foulardiert, welche die in der nachfolgenden Tabelle I angegebenen Mengen an Emulsionen gemäss einem der Beispiele 1 bis 7 enthalten. Das foulardierte Papier wird während 10 Minuten bei 90°C getrocknet. Die erzielte Oberflächenleimung des behandelten Papiers wird aufgrund des Wasseraufnahmetests nach Cobb bei 30 Sekunden Einwirkungsdauer (WA $Cobb_{30}$) gemäss DIN 53 132 geprüft. Je tiefer die Wasseraufnahme im Wa $Cobb_{30}$ Test ist, desto besser ist die Oberflächenleimung des behandelten Papiers. Die Ergebnisse des WA $Cobb_{30}$ Tests sind in der nachfolgenden Tabelle I ebenfalls angegeben.

Tabelle I

| Emulsion gemäss Beispiel | Gehalt * der Emulsion | Gehalt * der Foulardierflotte ** | Auftrag * $mg/m^2$ | Ergebnis des WA $Cobb_{30}$ Tests $g/m^2$ |
|---|---|---|---|---|
| 1 | 20 | 0,1 | 100 | 20 |
| 2 | 20 | 0,1 | 100 | 18 |
| 3 | 20 | 0,1 | 100 | 16 |
| 4 | 30 | 0,1 | 100 | 18 |
| 5 | 30 | 0,1 | 100 | 41 |
| 6 | 30 | 0,1 | 100 | 25 |
| 7 | 20 | 0,1 | 100 | 16 |
| unbehandeltes Papier | | | | 188 |

* Berechnet auf Trockensubstanz

** erhalten durch Verdünnung der 20 bzw. 30%igen Emulsionen gemäss einem der Beispiele 1 bis 7 mit der entsprechenden Menge Wasser

Patentansprüche

1. Umsetzungsproduktsalz aus

(A) 1,0 Epoxygruppenäquivalent eines Diglycidyläthers des 2,2-Bis-(4'-hydroxyphenyl)-propans,

(B) 0,2 bis 1,0 Aminogruppenäquivalent eines Polyalkylenaminopolyamides aus

(B') einer polymerisierten, ungesättigten Fettsäure, die sich von Fettsäuren mit 12 bis 24 Kohlenstoffatomen ableitet, und

(B") einem aliphatischen Polyalkylenpolyamin mit 4 bis 12 Kohlenstoffatomen,

(C) 0,3 bis 0,6 Aminogruppenäquivalent mindestens eines primären Fettamines mit 12 bis 24 Kohlenstoffatomen,

(D) 0 bis 1,0 Mol pro Epoxygruppenäquivalent der Komponente (A) eines Epihalogenhydrins
und

(E) 0,01 bis 0,5 Mol pro Aminogruppenäquivalent der Komponenten (B) und (C) mindestens einer gesättigten oder ungesättigten Fettsäure mit 12 bis 24 Kohlenstoffatomen oder deren Alkylester mit 1 bis 4 Kohlenstoffatomen im Alkylrest, Isocyanat, Halogenide oder Keten-Dimer, wobei die Umsetzungsreaktion gegebenenfalls in Gegenwart eines inerten, organischen Lösungsmittels bei Temperaturen bis zu 110°C durchgeführt werden und dafür gesorgt wird, dass durch einen Säurezusatz spätestens nach Beendigung der Umsetzungen eine mit Wasser auf 10 bis 40 Gewichtsprozent verdünnte Probe des Reaktionsgemisches unter Salzbildung einen pH-Wert von 2 bis 8 aufweist.

2. Umsetzungsproduktsalz nach Anspruch 1, dadurch gekennzeichnet, dass es aus 0,1 bis 0,5 Mol der zusätzlichen Komponente (D) pro Epoxydgruppenäquivalent der Komponente (A) erhältlich ist.

3. Umsetzungsprodukt nach Anspruch 1, dadurch gekennzeichnet, dass es unter Zusatz von Essigsäure erhältlich ist, wobei eine mit Wasser verdünnte Probe des Umsetzungsproduktsalzes einen pH-Wert von 4 bis 6 aufweist.

4. Umsetzungsproduktsalz nach Anspruch 1, dadurch gekennzeichnet, dass man als Komponente (E) eine gesättigte oder ungesättigte Fettsäure mit 12 bis 24 Kohlenstoffatomen oder deren Alkylester mit 1 bis 4 Kohlenstoffatomen im Alkylrest, Isocyanat oder Halogenide einsetzt.

5. Umsetzungsproduktsalz nach Anspruch 4, dadurch gekennzeichnet, dass man pro Amingruppenäquivalent der Komponenten (B) und (C) 0,02 bis 0,5 Mol der Komponente (E) einsetzt.

6. Umsetzungsproduktsalz nach Anspruch 1, dadurch gekennzeichnet, dass man als Komponente (E) das Keten-Dimer einer gesättigten oder ungesättigten Fettsäure mit 12 bis 24 Kohlenstoffatomen einsetzt.

7. Umsetzungsproduktsalz nach Anspruch 6, dadurch gekennzeichnet, dass man pro Aminogruppenäquivalent der Komponenten (B) und (C) 0,01 bis 0,25 Mol der Komponente (E) einsetzt.

8. Umsetzungsproduktalz nach Anspruch 1, dadurch gekennzeichnet, dass es als 10 bis 40-gewichtsprozentige, lagerstabile, dünnflüssige, feinteilige Emulsion vorliegt.

9. Verfahren zur Herstellung der Umsetzungsproduktsalze gemäss einem der Ansprüche 1 bis 8, dadurch gekennzeichnet, dass man

1,0 Epoxygruppenäquivalent eines Diglycidyläthers des 2,2-Bis(4'-hydroxyphenyl)-propans als Komponente (A),

0,2 bis 1,0 Aminogruppenäquivalent eines Polyalkylenpolyaminoamides aus

(B') einer polymerisierten, ungesättigten Fettsäure, die sich von Fettsäuren mit 12 bis 24 Kohlenstoffatomen ableitet,
und

(B") einem aliphatischen Polyalkylenpolyamin mit 4 bis 12 Kohlenstoffatomen als Komponente (B),

0,3 bis 0,6 Aminogruppenäquivalent mindestens eines primären Fettamins mit 12 bis 24 Kohlenstoffatomen als Komponente (C),

0 bis 1,0 Mol pro Epoxygruppenäquivalent der Komponente (A) eines Epihalogenhydrins als Komponente (D)

und

0,01 bis 0,5 Mol pro Aminogruppenäquivalent der Komponenten (B) und (C) einer gesättigten oder ungesättigten Fettsäure mit 12 bis 24 Kohlenstoffatomen oder deren Alkylester mit 1 bis 4 Kohlenstoffatomen im Alkylrest, Isocyanat, Halogenide oder Keten-Dimer als Komponente (E),

in beliebiger Reihenfolge gegebenenfalls in Gegenwart eines inerten, organischen Lösungsmittels bei Temperaturen bis zu 110°C umsetzt und dafür sorgt, dass durch einen Säurezusatz spätestens nach Beendigung der Umsetzungen, eine mit Wasser auf 10 bis 40 Gewichtsprozent verdünnte Probe des Reaktionsgemisches unter Salzbildung einen pH-Wert von 2 bis 8 aufweist.

10. Verwendung des Umsetzungsproduktsalzes gemäss einem der Ansprüche 1 bis 9 als Papierleimungsmittel.

0037379

Europäisches Patentamt

# EUROPÄISCHER RECHERCHENBERICHT

Nummer der Anmeldung

EP 81 81 0115.6

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | DE - A1 - 2 755 142 (CIBA-GEIGY)<br>* Seite 1; Seite 12, Zeile 18 bis Seite 13, Zeile 14 *<br>& FR - A - 2 374 467<br>-- | 1-5, 8-10 | C 08 G 59/46<br>C 08 G 59/50<br>C 08 G 59/56<br>D 21 H 3/08<br>D 21 H 3/38 |
| X | DE - A - 2 104 097 (CIBA-GEIGY)<br>* Seiten 1, 2; Seite 8, Zeilen 7 bis 10, Seite 9, Zeilen 9 bis 12, 18 bis 24 *<br>& GB - A - 1 300 505<br>-- | 1-5, 8,9 | RECHERCHIERTE SACHGEBIETE (Int. Cl.³) |
| | CH - A5 - 564 043 (CIBA-GEIGY)<br>* Spalte 3, Zeilen 66, 67 *<br>-- | 2 | C 08 G 59/00<br>D 21 H 3/00 |
| | DE - A1 - 2 557 409 (BAYER)<br>* Seite 2 *<br>-- | 1-10 | |
| A | DE - A - 2 250 995 (HERCULES POWDER CO.)<br>* Seite 5 *<br>---- | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| X | Der vorliegende Recherchenbericht wurde für alle Patentansprüche erstellt. | | |

| Recherchenort | Abschlußdatum der Recherche | Prüfer |
|---|---|---|
| Berlin | 24-06-1981 | KRAIL |